# EUROPÄISCHE PATENTSCHRIFT

(11) **EP 2 950 227 B1**
(45) Veröffentlichungstag und Bekanntmachung des Hinweises auf die Patenterteilung: **01.06.2016**
(21) Anmeldenummer: 14170044.3
(22) Anmeldetag: 27.05.2014
(51) Int. Cl.: G06F 21/31, H04L 9/32

(54) **Authentifizierungsverfahren**
Authentication method
Procédé d'authentification

(43) Veröffentlichungstag der Anmeldung: 02.12.2015
(73) Patentinhaber: SICK AG, 79183 Waldkirch/Breisgau (DE)
(72) Erfinder: Engler, Jan, 79104 Freiburg (DE); Falkenberg, Norbert, 79258 Hartheim (DE); Heidepriem, Sebastian, 79297 Winden (DE); Schröder, Kai, 79285 Ebringen (DE)
(74) Vertreter: Manitz, Finsterwald & Partner GbR

(56) Entgegenhaltungen:
- US-A1- 2013 151 849
- "PSS 21H-8G1 B3 I/A Series HARDWARE Product Specifications I/A Series Remote Terminal Unit (RTU) Station Computing Device (SCD) SCD5200 Architectural Overview", , 6. April 2014 (2014-04-06), Seiten 1-8, XP055143744, Internet Gefunden im Internet: URL:http://resource.invensys.com/iaseries/ pss/21h8/21h8g1b3.pdf [gefunden am 2014-10-01]

## Beschreibung

Die vorliegende Erfindung betrifft ein Verfahren zur Authentifizierung an einem Gerät, insbesondere einem Embedded-Gerät, mit einer Bedienerschnittstelle.

Geräte, insbesondere Embedded-Geräte, werden beispielsweise zur Automatisierung von Industrieprozessen eingesetzt. Ein Embedded-Gerät (auch embedded system, eingebettetes System) bezeichnet dabei zum Beispiel einen elektronischen Rechner, der in einen technischen Kontext eingebettet bzw. eingebunden ist und dabei zum Beispiel Steuerungs- und Regelungsaufgaben übernimmt. Die Parameter und damit das Verhalten der Geräte können üblicherweise nach Eingabe eines Passwortes verändert werden, wodurch auch die Vorgänge in dem Industrieprozess veränderbar sind.

Die US 2013/0151849 A1 beschreibt ein Embedded-Gerät, auf welches Zugriff durch die korrekte Lösung einer Aufgabe erhalten werden kann. Der Zugriff wird dabei zeitlich begrenzt. Weiterhin ist in "PSS 21 H-8G1 B3 I/A Series HARDWARE Product Specification" (http://resource. inven-sys.com/iaseries/pss/21h8/21h8g1b3.pdf) die Verwendung eines Fernzugriffs zur Passworteingabe an einem Embedded-Gerät bekannt.

Üblicherweise dient dabei das Passwort dazu, die Berechtigung eines Bedieners nachzuweisen, das heißt diesen zu authentifizieren. Nachteiligerweise werden die Passwörter an Geräten jedoch selten oder gar nicht geändert und sind daher meist statisch. Solche statischen Passwörter besitzen nur eine geringe Schutzwirkung, da sie beispielsweise durch Raten (sogenannte Brute-Force-Attacken) oder durch Ausspähen bei der Eingabe herausgefunden werden können.

Ein Angreifer kann somit auf unberechtigte Weise Zugriff zu dem Gerät erhalten und insbesondere das Geräteverhalten nachteilig verändern.

Es ist daher die der Erfindung zugrundeliegende Aufgabe, ein Authentifizierungsverfahren anzugeben, welches eine erhöhte Sicherheit gegen unberechtigten Zugriff auf das Gerät gewährleistet.

Erfindungsgemäß wird diese Aufgabe durch ein Verfahren gemäß Anspruch 1 und insbesondere dadurch gelöst, dass an der Bedienerschnittstelle eine zufällig ausgewählte Aufgabe (Challenge) angezeigt wird und nach Eingabe einer korrekten Lösung (Response) der Aufgabe an der Bedienerschnittstelle zumindest eine Funktion des Geräts einmalig freigeschaltet wird, wobei die Lösung aufgrund einer mathematischen Funktion mit der Aufgabe als Eingangswert in dem Gerät berechnet wird.

Anders ausgedrückt erfolgt die Authentifizierung an dem Gerät nach einem sogenannten Challenge-and-Response-Verfahren, das heißt, das Gerät zeigt an seiner Bedienerschnittstelle eine Aufgabe an, die beispielweise eine sechsstellige Zahl ist. Der Bediener muss anschließend aus der Aufgabe anhand einer mathematischen Funktion die Lösung berechnen lassen und diese an der Bedienerschnittstelle eingeben. Die Aufgabe wird dabei zufällig ausgewählt und kann auf diese Weise für jede Authentifizierung verschieden sein. Dementsprechend kann auch die zur Authentifizierung benötigte Lösung für jeden Authentifizierungsvorgang unterschiedlich sein, was das Erraten der Lösung nahezu unmöglich macht, da jeweils nur ein einziger Versuch zum Erraten der Lösung zur Verfügung steht.

Vorteilhafterweise wird somit das Ausspähen und spätere Wiedergeben einer korrekten Lösung durch einen Angreifer (sogenannte Replay-Attacke) nahezu unmöglich gemacht. Die korrekte Lösung kann zudem nur in Kenntnis der mathematischen Funktion berechnet werden, wobei die mathematische Funktion auch in dem Gerät selbst gespeichert ist und von dem Gerät mit der Aufgabe als Eingangswert berechnet wird, um zu überprüfen, ob an der Bedienerschnittstelle die korrekte Lösung eingegeben wurde.

Die Zufallszahl für die Aufgabe kann dabei eine Pseudozufallszahl oder eine echte Zufallszahl sein.

Aufgrund des lediglich einmaligen Freischaltens einer Funktion des Geräts wird zudem verhindert, dass eine Funktion, wie beispielsweise das Ändern eines Systemparameters, dauerhaft freigeschaltet bleibt. Stattdessen wird die Funktion erfindungsgemäß nach ihrer einmaligen Ausführung wieder gesperrt. Auf diese Weise wird die Sicherheit des Geräts weiter erhöht.

Bei dem Gerät kann es sich um ein Automatisierungsgerät, das heißt insbesondere um ein Embedded-Gerät bzw. Embedded-Device handeln, wobei das Gerät bevorzugt kein Personal-Computer (PC) ist.

Vorteilhafte Ausführungsformen der Erfindung sind in der Beschreibung, der Zeichnung und den Unteransprüchen angegeben.

Gemäß einer vorteilhaften Ausführungsform der Erfindung ist die mathematische Funktion eine Einwegfunktion, insbesondere eine kryptographische Hash-Funktion, bevorzugt eine MD4-, MD5- oder SHA-Funktion. Bei der mathematischen Funktion kann es sich also um eine sogenannte Falltürfunktion handeln, welche nicht ohne großen Aufwand zurückrechenbar ist. Eine solche Einwegfunktion wird auch als Hash-Funktion bezeichnet, wobei bei Verwendung einer kryptographischen Hash-Funktion die Gefahr von Kollisionen verringert werden kann, das heißt die Gefahr verringert wird, dass zwei unterschiedliche Aufgaben dieselbe Lösung besitzen.

Bevorzugt ist die Länge der Lösung halb so lang wie die Länge der Aufgabe. Die Lösung umfasst also nur halb so viele Ziffern wie die Aufgabe. Alternativ kann die Lösung auch aus einer festen Anzahl von Ziffern bestehen, beispielsweise aus vier, acht oder zwölf Ziffern. Dabei kann sowohl die Aufgabe als auch die Lösung an der Bedienerschnittstelle im Dezimal-, Binär- oder Hexadezimalsystem vorliegen.

Besonders bevorzugt beruht der Eingangswert auch auf einem in dem Gerät gespeicherten Geheimnis. Bei dem in dem Gerät gespeicherten Geheimnis kann es sich um eine vorbestimmte Zahl beliebiger Länge, beispielsweise mit sechs, acht, zwölf oder vierundzwanzig Ziffern handeln, die z.B. von dem Hersteller des Geräts festgelegt wird. Das in dem Gerät gespeicherte Geheimnis kann mit der angezeigten Aufgabe verrechnet werden, um den Eingangswert für die mathematische Funktion zu bilden. Beispielsweise kann der Eingangswert durch eine Multiplikation von Aufgabe und Geheimnis, durch eine Addition oder Subtraktion von Aufgabe und Geheimnis oder durch eine exklusive Oder-Verknüpfung (XOR) gebildet werden.

Dabei ist von Vorteil, dass ein Angreifer zur Ermittlung der korrekten Lösung neben der mathematischen Funktion auch das Geheimnis kennen muss, wodurch die Sicherheit des Geräts weiter erhöht wird. Zudem kann beispielsweise eine öffentlich bekannte Hash-Funktion als mathematische Funktion verwendet werden, wobei die Sicherheit der Authentifizierung an dem Gerät durch das in dem Gerät gespeicherte Geheimnis gewahrt bleibt.

Gemäß einer vorteilhaften Ausführungsform der Erfindung wird die Aufgabe an eine Gegenstelle übermittelt und die Lösung durch die Gegenstelle berechnet. Dazu kann in der Gegenstelle auch das in dem Gerät gespeicherte Geheimnis gespeichert sein. Die Aufgabe kann also an die Gegenstelle übermittelt werden, wobei sowohl die Gegenstelle als auch das Gerät selbst die Lösung unabhängig voneinander berechnen. Die von der Gegenstelle berechnete Lösung wird anschließend an der Bedienerschnittstelle des Geräts eingegeben und das Gerät überprüft, ob die von dem Gerät und von der Gegenstelle berechnete Lösung übereinstimmen. Ist dies der Fall, ist die Authentifizierung an dem Gerät erfolgreich und zumindest eine Funktion des Geräts wird einmalig freigeschaltet.

Soll beispielsweise eine Funktion des Geräts aktiviert werden, für welche eine Authentifizierung notwendig ist, so zeigt das Gerät an der Bedienerschnittstelle eine Aufgabe an. Die Aufgabe kann zum Beispiel von einem Service-Mitarbeiter abgelesen und an die Herstellerfirma des Geräts (das heißt an die Gegenstelle) übermittelt werden, wobei der Service-Mitarbeiter seine Identität gegenüber der Herstellerfirma gesondert nachweisen muss. Bei der Herstellerfirma wird anschließend die Aufgabe mit dem auch in dem Gerät gespeicherten Geheimnis verrechnet und aus dem sich so ergebenden Eingangswert die Lösung mittels einer kryptographischen Hash-Funktion ermittelt. Die Lösung wird anschließend dem Service-Mitarbeiter mitgeteilt, welcher diese an der Bedienerschnittstelle des Geräts eingibt. Das Gerät vergleicht die eingegebene Lösung mit der intern in dem Gerät berechneten Lösung und gibt bei Übereinstimmung der internen und der eingegebenen Lösung die gewünschte Funktion frei.

Zur Anzeige der Aufgabe und zur Eingabe der Lösung kann die Bedienerschnittstelle eine Anzeigeeinheit und eine Eingabeeinheit, beispielsweise ein Display und eine Tastatur umfassen. Alternativ kann die Bedienerschnittstelle auch von einem mit dem Gerät gekoppelten Computer (zum Beispiel einem Notebook) gebildet sein, wobei der Computer so betrieben wird beziehungsweise angeschlossen ist, dass er keine Datenverbindung mit der Gegenstelle besitzt oder eine solche herstellen kann. Der Computer ist also insbesondere nicht mit dem Internet verbunden.

Bevorzugt werden die Aufgabe und/oder die Lösung telefonisch übermittelt. Beispielsweise kann ein Service-Mitarbeiter die Aufgabe mittels MFV-Tönen (Mehrfrequenzwahlverfahren) an ein automatisches Telefonsystem der Herstellerfirma des Geräts durchgeben, wobei die Lösung dem Service-Mitarbeiter mittels einer automatischen Ansage mitgeteilt werden kann. Die Lösung kann zu diesem Zweck von der Herstellerfirma zur Zeit der Eingabe berechnet werden.

Alternativ werden die Aufgabe und/oder die Lösung mittels einer Datenverbindung, insbesondere unter Verwendung eines Internet-Protokolls, übermittelt. Ein Service-Mitarbeiter kann sich zu diesem Zweck beispielsweise eines nicht mit dem Gerät verbundenen Notebook-PCs oder Mobiltelefons bedienen, um eine Datenverbindung zu der Gegenstelle herzustellen und die Aufgabe über die Datenverbindung zu übermitteln. Die Lösung kann ebenfalls mittels der Datenverbindung empfangen werden.

Bevorzugt wird die Datenverbindung mittels kryptographischer Verfahren gesichert. Hierzu können Verfahren wie SSL (Secure Sockets Layer) oder HTTPS (Hypertext Transfer Protocol Secure) verwendet werden. Einem Angreifer wird es dadurch zusätzlich erschwert, die Aufgabe und die zugehörige Lösung abzufangen, wodurch das Erstellen von Tabellen zusammengehöriger Paare von Aufgabe und Lösung erschwert wird. Die Sicherheit der Authentifizierung an dem Gerät wird auf diese Weise zusätzlich erhöht.

Gemäß einer weiteren vorteilhaften Ausführungsform der Erfindung umfasst die Gegenstelle einen Webserver für einen Webservice. Die Gegenstelle kann also ein Webportal bereitstellen, an welchem sich beispielsweise ein Service-Mitarbeiter oder ein Bediener des Geräts auf bekannte Art und Weise authentifizieren kann, wobei anschließend in dem Webportal die Aufgabe eingegeben werden kann und in dem Webportal die entsprechende Lösung anzeigt wird.

Gemäß einer weiteren vorteilhaften Ausführungsform sind in der Aufgabe Informationen darüber enthalten, welche Funktion des Geräts freigeschaltet werden soll. Beispielsweise können für die Aufgabe Zufallszahlen in vorbestimmten Bereichen verwendet werden, wenn vorbestimmte Funktionen des Geräts freigeschaltet werden sollen. Auf diese Weise kann der Gerätehersteller zusätzlich überwachen, auf welche Funktionen der von ihm hergestellten Geräte zugegriffen wird. Bei Bedarf können besonders sicherheitskritische Funktionen zudem zentral gesperrt werden, indem die Übermittlung von korrekten Lösungen (Responses) für die jeweiligen Funktionen unterlassen wird.

Gemäß einer weiteren vorteilhaften Ausführungsform der Erfindung wird die Funktion des Geräts für einen vorbestimmten Zeitraum freigeschaltet. Dies bedeutet, dass nach der erfolgreichen Authentifizierung an dem Gerät eine gewünschte Funktion nur für eine gewisse Zeitdauer verfügbar ist und nach Ablauf dieser Zeitdauer eine erneute Authentifizierung erfolgen muss. Der vorbestimmte Zeitraum kann beispielsweise eine Minute, fünf Minuten oder zehn Minuten betragen. Ein unbefugter Zugriff auf das Gerät kann somit auch dann vermieden werden, wenn das Gerät nach erfolgreicher Authentifizierung längere Zeit unbeaufsichtigt ist.

Alternativ zur Verwendung einer Einwegfunktion kann die Aufgabe durch Verwendung eines asymmetrischen Verschlüsselungsverfahrens (z.B. des RSA-Verfahrens) erzeugt werden, wobei mit einem öffentlichen Schlüssel der Gegenstelle die Aufgabe erzeugt wird und die Lösung durch Entschlüsseln der Aufgabe mit einem privaten Schlüssel errechnet wird. Das Gerät kann zu diesem Zweck intern eine Zufallszahl als Aufgabe ermitteln und die Aufgabe beispielsweise mit einem öffentlichen Schlüssel des Geräteherstellers verschlüsseln. Die verschlüsselte Aufgabe wird anschließend an der Bedienerschnittstelle angezeigt und an die Gegenstelle (zum Beispiel dem Gerätehersteller) übermittelt. Die Gegenstelle entschlüsselt die verschlüsselte Aufgabe mit ihrem privaten Schlüssel und übermittelt die unverschlüsselte Aufgabe zurück. Die unverschlüsselte Aufgabe dient somit zugleich als Lösung. Stellt das Gerät fest, dass die eingegebene Lösung der unverschlüsselten Aufgabe entspricht, ist die Authentifizierung erfolgreich und eine gewünschte Funktion kann freigeschaltet werden.

Bei der Verwendung eines asymmetrischen Verschlüsselungsverfahrens ist von Vorteil, dass die Gegenstelle und das Gerät nicht dieselbe mathematische Funktion ausführen und nicht zwangsläufig ein gemeinsames Geheimnis benötigen, da die Verschlüsselung und Entschlüsselung auf unterschiedlichen Schlüsseln basieren.

Im Übrigen sind die in Verbindung mit einer Einwegfunktion beschriebenen Ausführungsformen bzw. Weiterbildungen der Erfindung auch mit dem asymmetrischen Verschlüsselungsverfahren kombinierbar.

Nachfolgend wird die Erfindung rein beispielhaft unter Bezugnahme auf die beigefügte Zeichnung beschrieben. Es zeigt:

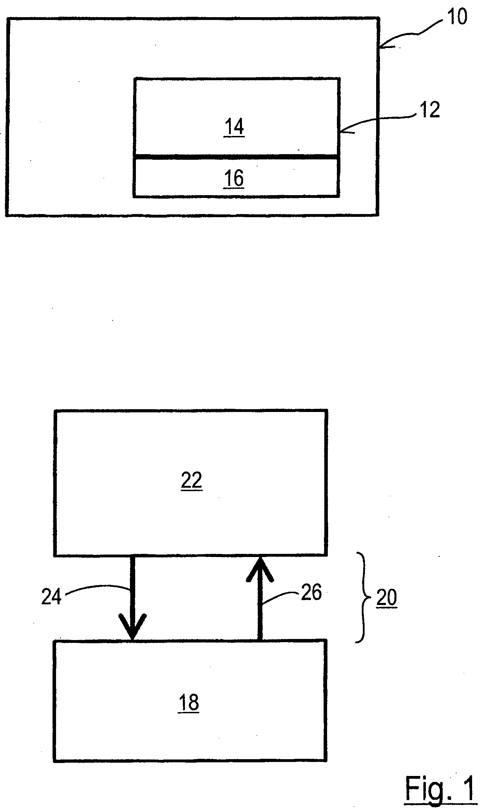

- Fig. 1: eine schematische Darstellung eines Geräts, einer Übermittlungseinrichtung und einer Gegenstelle.

In Fig. 1 ist schematisch ein Embedded-Gerät 10 dargestellt, das eine Bedienerschnittstelle 12 mit einem Display 14 und einer Tastatur 16 umfasst.

Die Bedienerschnittstelle 12 kann alternativ von einem (nicht gezeigten) Schnittstellen-Notebook gebildet werden, welches ausschließlich eine Datenverbindung mit dem Embedded-Gerät 10 besitzt.

Weiterhin zeigt Fig. 1 einen Webserver 18 der Herstellerfirma des Embedded-Geräts 10, welcher mittels einer Datenverbindung 20 mit einem Service-Notebook 22 verbunden ist.

Wird beispielsweise bei einer Wartung des Embedded-Geräts 10 eine Funktion des Embedded-Geräts 10 benötigt, welche eine Authentifizierung erfordert, so zeigt das Embedded-Gerät 10 auf dem Display 14 eine sechsstellige Zahl an, die die Aufgabe ist. Die sechsstellige Zahl wird anschließend mittels des Service-Notebooks 22 als Anfrage 24 an den Webserver 18 übermittelt. In dem Webserver 18 und dem Embedded-Gerät 10 ist jeweils die gleiche kryptographische Hash-Funktion und ein (gleiches) gemeinsames Geheimnis hinterlegt, mittels welchem das Embedded-Gerät 10 und der Webserver 18 jeweils die Lösung der Aufgabe berechnen. Die Lösung der Aufgabe wird als Antwort 26 mittels der Datenverbindung 20 an das Service-Notebook 22 übertragen und von dem Service-Notebook 22 angezeigt.

Anschließend wird die Lösung mittels der Tastatur 16 in das Embedded-Gerät 10 eingegeben und von dem Embedded-Gerät 10 auf Übereinstimmung mit der intern in dem Embedded-Gerät 10 berechneten Lösung überprüft. Bei Übereinstimmung wird die angeforderte Funktion einmalig für z.B. zehn Minuten freigegeben und es kann beispielsweise ein Rücksetzen der Betriebsparameter des Embedded-Geräts 10 erfolgen.

### Bezugszeichenliste

- 10: Embedded-Gerät
- 12: Bedienerschnittstelle
- 14: Display
- 16: Tastatur
- 18: Webserver
- 20: Datenverbindung
- 22: Service-Notebook
- 24: Anfrage
- 26: Antwort

## Patentansprüche

1. Verfahren zur Authentifizierung an einem Gerät (10), insbesondere einem Embedded-Gerät, mit einer Bedienerschnittstelle (12), wobei
an der Bedienerschnittstelle (12) eine zufällig ausgewählte Aufgabe, Challenge, angezeigt wird und
nach Eingabe einer korrekten Lösung, Response, der Aufgabe an der Bedienerschnittstelle (12) zumindest eine Funktion des Geräts (10) einmalig freigeschaltet wird, wobei die Lösung aufgrund einer mathematischen Funktion mit der Aufgabe als Eingangswert in dem Gerät (10) berechnet wird.

2. Verfahren nach Anspruch 1,
**dadurch gekennzeichnet, dass**
die mathematische Funktion eine Einwegfunktion ist, insbesondere eine kryptographische Hash-Funktion, bevorzugt eine MD4-, MD5- oder SHA-Funktion.

3. Verfahren nach Anspruch 1 oder 2,
**dadurch gekennzeichnet, dass**
der Eingangswert aus einem in dem Gerät (10) gespeicherten Geheimnis und der Aufgabe bestimmt wird.

4. Verfahren nach Anspruch 3,
**dadurch gekennzeichnet, dass** die Aufgabe an eine Gegenstelle (18) übermittelt wird und die Gegenstelle (18) die Lösung berechnet.

5. Verfahren nach Anspruch 4,
**dadurch gekennzeichnet, dass** die Aufgabe und/oder die Lösung telefonisch übermittelt werden.

6. Verfahren nach Anspruch 4,
**dadurch gekennzeichnet, dass** die Aufgabe und/oder die Lösung mittels einer Datenverbindung (20), insbesondere unter Verwendung eines Internet-Protokolls, übermittelt werden.

7. Verfahren nach Anspruch 6,
**dadurch gekennzeichnet, dass** die Datenverbindung (20) mittels kryptographischer Verfahren gesichert wird.

8. Verfahren nach Anspruch 6 oder 7,
**dadurch gekennzeichnet, dass** die Gegenstelle einen Webserver (18) für einen Webservice umfasst.

9. Verfahren nach einem der vorstehenden Ansprüche,
**dadurch gekennzeichnet, dass** in der Aufgabe Informationen darüber enthalten sind, welche Funktion des Geräts (10) freigeschaltet werden soll.

10. Verfahren nach einem der vorstehenden Ansprüche,
**dadurch gekennzeichnet, dass** die Funktion des Geräts (10) für einen vorbestimmten Zeitraum freigeschalten wird.

11. Verfahren nach einem der Ansprüche 1 und 3 bis 10,
**dadurch gekennzeichnet, dass** die Aufgabe durch Verwendung eines asymmetrischen Verschlüsselungsverfahrens mit einem öffentlichen Schlüssel der Gegenstelle (18) erzeugt wird und die Lösung durch entschlüsseln der Aufgabe mit einem privaten Schlüssel errechnet wird.

## Claims

1. A method for authentication at a device (10), in particular at an embedded device, having a user interface (12), wherein
a randomly selected question, "challenge", is displayed at the user interface and
after inputting a correction solution, "response", to the question at the user interface (12), at least one function of the device (10) is enabled once, with the solution being calculated in the device (10) based on a mathematical function with the question as an input value.

2. A method in accordance with claim 1,
**characterized in that**
the mathematical function is a one-way function, in particular a cryptographic hash function, preferably an MD4 function, an MD5 function or an SHA function.

3. A method in accordance with claim 1 or claim 2,
**characterized in that**
the input value is determined from a secret stored in the device (10) and from the question.

4. A method in accordance with claim 3,
**characterized in that**
the question is communicated to a destination device (18) and the destination device (18) calculates the solution.

5. A method in accordance with claim 4,
**characterized in that**
the question and/or the solution are communicated by telephone.

6. A method in accordance with claim 4,
**characterized in that**
the question and/or the solution are communicated by means of a data link (20), in particular using an internet protocol.

7. A method in accordance with claim 6,
**characterized in that**
the data link (20) is secured by means of cryptographic methods.

8. A method in accordance with claim 6 or claim 7,
**characterized in that**
the destination device comprises a web server (18) for a web service.

9. A method in accordance with any one of the preceding claims,
**characterized in that**
information on which function of the device (10) should be enabled is contained in the question.

10. A method in accordance with any one of the preceding claims,
**characterized in that**
the function of the device (10) is enabled for a predefined period of time.

11. A method in accordance with any one of the claims 1 and 3 to 10,
**characterized in that**
the question is generated by using an asymmetrical cryptographic technique using a public key of the destination device (18) and the solution is calculated by decrypting the question using a private key.

## Revendications

1. Procédé pour l'authentification sur un appareil (10), en particulier un appareil intégré ("embedded"), comprenant une interface utilisateur (12), dans lequel on affiche au niveau de l'interface utilisateur (12) une tâche arbitrairement choisie, "challenge", et
après saisie d'une solution correcte, "response", de la tâche au niveau de l'interface utilisateur (12) on active au moins une fonction de l'appareil (10) pour une fois, et la solution est calculée dans l'appareil (10) sur la base d'une fonction mathématique avec la tâche à titre de valeur de départ.

2. Procédé selon la revendication 1,
**caractérisé en ce que** la fonction mathématique est une fonction à usage unique, en particulier une fonction de hachage cryptographique, de préférence une fonction MD4, MD5 ou SHA.

3. Procédé selon la revendication 1 ou 2,
**caractérisé en ce que** la valeur de départ est déterminée à partir d'un secret mémorisé dans l'appareil (10) et de la tâche.

4. Procédé selon la revendication 3,
**caractérisé en ce que** la tâche est transmise à un poste correspondant (18), et le poste correspondant (18) calcule la solution.

5. Procédé selon la revendication 4,
**caractérisé en ce que** la tâche et/ou la solution sont transmises par voie téléphonique.

6. Procédé selon la revendication 4,
**caractérisé en ce que** la tâche et/ou la solution sont transmises au moyen d'une liaison de données (20), en particulier en utilisant un protocole Internet.

7. Procédé selon la revendication 6,
**caractérisé en ce que** la liaison de données (20) est sécurisée au moyen d'une procédure cryptographique.

8. Procédé selon la revendication 6 ou 7,
**caractérisé en ce que** le poste correspondant inclut un serveur Web (18) pour un service Web.

9. Procédé selon l'une des revendications précédentes,
**caractérisé en ce que** la tâche contient des informations concernant la fonction de l'appareil (10) qui doit être activé.

10. Procédé selon l'une des revendications précédentes,
**caractérisé en ce que** la fonction de l'appareil (10) est activée pour une durée prédéterminée.

11. Procédé selon l'une des revendications 1 et 3 à 10,
**caractérisé en ce que** la tâche est engendrée en utilisant une procédure de cryptage asymétrique avec une clé publique du poste correspondant (18), et la solution est calculée par décodage de la tâche avec une clé privée.
